# EUROPÄISCHE PATENTSCHRIFT

(11) **EP 1 248 987 B1**
(45) Veröffentlichungstag und Bekanntmachung des Hinweises auf die Patenterteilung: **20.08.2003**
(21) Anmeldenummer: 00991571.1
(22) Anmeldetag: 21.12.2000
(51) Int. Cl.: G06F 13/40

(54) **MULTI-MASTER-BUS-SYSTEM**
MULTI MASTER BUS SYSTEM
SYSTEME A BUS MULTI-MAITRE

(30) Priorität: 18.01.2000 DE 10001874
(43) Veröffentlichungstag der Anmeldung: 16.10.2002
(73) Patentinhaber: Infineon Technologies AG, 81669 München (DE)
(72) Erfinder: HUCH, Martin, 81739 München (DE); MÜLLER, Jörg, 95369 Untersteinach (DE)
(74) Vertreter: Repkow, Ines, Dr. Dipl.-Ing.
(86) Internationale Anmeldenummer: DE0004639
(87) Internationale Veröffentlichungsnummer: WO01053952

(56) Entgegenhaltungen:
- US-A- 5 408 646
- US-A- 5 689 661
- US-A- 5 935 232

## Beschreibung

Die vorliegende Erfindung betrifft eine Vorrichtung gemäß dem Oberbegriff des Patentanspruchs 1, d. h. ein Multi-Master-Bus-System mit einem Bus zur Verbindung von daran angeschlossenen Einrichtungen, und mit einem den Bus und/oder die Busvergabe steuernden Bus-Controller.

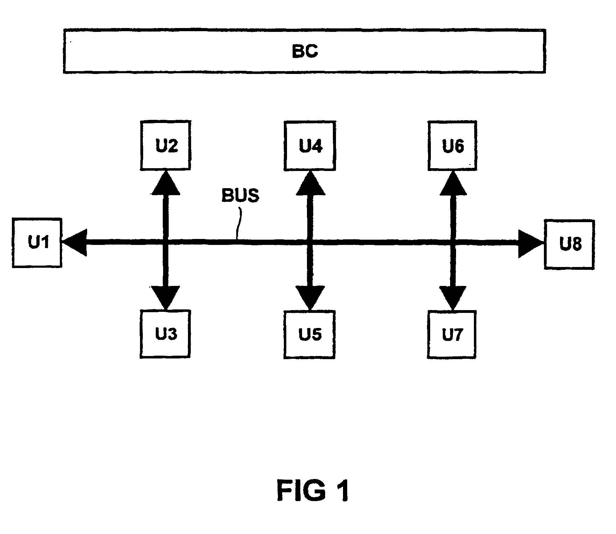

Multi-Master-Bus-Systeme sind seit vielen Jahren in unzähligen Ausführungsformen bekannt. Der prinzipielle Aufbau eines solchen Bus-Systems ist in Figur 1 veranschaulicht.

Das gezeigte Bus-System besteht aus einem Bus BUS und einem Bus-Controller BC. Am Bus sind Einrichtungen U1, U2, ... angeschlossen. Diese Einrichtungen U1 U2, ... sind über den Bus miteinander, und über in der Figur 1 nicht dargestellte Leitungen mit dem Bus-Controller BC verbunden; der Bus-Controller steuert den Bus und/oder die Bus-Vergabe.

Die Einrichtungen U1, U2, ... können beliebige elektrische oder elektromechanische Einrichtungen sein. Im betrachteten Beispiel möge es sich um verschiedene Komponenten eines Mikrocontrollers handeln, also beispielsweise um dessen CPU, dessen interne Speichereinrichtung(en), dessen A/D-Wandler, dessen D/A-Wandler, dessen Interrupt-Controller, dessen DMA-Controller, dessen Schnittstellen zu externen Bussen und Einrichtungen, etc.

Die Einrichtungen U1, U2, ... können Master, Slave, oder wahlweise Master oder Slave des Bus-Systems sein. Im betrachteten Beispiel gibt es mehrere Einrichtungen, die Master des Bus-Systems sein können (deshalb wird das vorliegend betrachtete Bus-System als Multi-Master-Bus-System bezeichnet).

Eine Einrichtung, die Master ist, kann auf eigene Veranlassung Daten und/oder Signale an eine der anderen Einrichtungen, die am Bus angeschlossen sind, übermitteln, oder Daten und/oder Signale von einer der anderen Einrichtungen, die am Bus angeschlossen sind, anfordern und empfangen. Wenn eine Einrichtung Master werden will, muß sie dies in der Regel dem Bus-Controller BC melden (beispielsweise durch die Übertragung eines sogenannten Bus-Request-Signals zum Bus-Controller BC). Der Bus-Controller überprüft, ob die betreffende Einrichtung Master werden kann, und sobald dies der Fall ist, meldet er ihr dies (beispielsweise durch Übermittlung eines sogenannten Bus-Grant-Signals an die die Master-Berechtigung anfordernde Einrichtung). Die betreffende Einrichtung wird dadurch bis auf weiteres der Master des Bus-Systems.

Die Einrichtungen, die Slaves sind, überprüfen, ob sie durch die über den Bus übertragenen Daten und/oder Signale, beispielsweise durch eine ihnen zugeordnete Adresse, angesprochen werden. Wenn eine Einrichtung dabei feststellt, daß sie angesprochen ist, überprüft sie eventuell noch, was sie in diesem Fall zu tun hat, und führt dann die von ihr erwartete Aktion aus. Die erwartete Aktion kann beispielsweise darin bestehen, daß die betreffende Einrichtung über den Bus versandte Daten entgegennimmt oder bestimmte Daten auf den Bus ausgibt.

Bus-Systeme der in der Figur 1 gezeigten Art weisen den Nachteil auf, daß immer nur jeweils eine der angeschlossenen Einrichtungen U1, U2, ... Master sein kann. Dadurch können über den Bus nur immer zwischen einem Master und einem Slave Daten und/oder Signale übertragen werden. Dies ist insbesondere in Fällen, in denen mehrere der am Bus angeschlossenen Einrichtungen Master sein können, häufig ein Nachteil.

Es sind bereits Bus-Systeme bekannt, bei welchen gleichzeitig mehrere der an den Bus angeschlossenen Einrichtungen Master sein und mit verschiedenen Slaves Daten und/oder Signale austauschen können. Ein solches System ist beispielsweise durch ein Verbindungsnetzwerk realisierbar, durch welches jede der daran angeschlossenen Einrichtungen über separate Leitungen mit allen anderen Einrichtungen verbunden ist. Derartige Systeme bezeichnet man als vollvermaschte Netze. Die praktische Realisierung solcher und ähnlicher Systeme ist jedoch insbesondere wegen der vielen langen Leitungen, die zwischen den Einrichtungen vorgesehen werden müssen, mit einem sehr hohen Aufwand verbunden.

Dokument US-A-5 935 232 (HARTMANN ALFRED C ET AL) 10. August 1999 (1999-08-10) offenbart ein Bus-System bestehend aus zwei Bussen die Einrichtungen mit einander verbinden. Die Einrichtungen können Daten vermitteln wahlweise über den einen oder anderen Bus.

Der vorliegenden Erfindung liegt daher die Aufgabe zugrunde, ein klein und einfach realisierbares und betreibbares Multi-Master-Bus-System zu schaffen, welches es gestattet, daß gleichzeitig mehrere Masters mit mehreren Slaves kommunizieren können.

Diese Aufgabe wird erfindungsgemäß durch ein Multi-Master-Bus-System gelöst, das die im kennzeichnenden Teil des Patentanspruchs 1 beanspruchten Merkmale aufweist.

Gemäß Patentanspruch 1 zeichnet sich das erfindungsgenäße Multi-Master-Bus-System dadurch aus, daß der Bus Datenund/oder Signalpfade aufweist, deren Verlauf durch den Bus-Controller statisch und/oder dynamisch konfigurierbar ist.

Dadurch ist es möglich, daß nur immer die zwei Einrichtungen, zwischen denen Daten auszutauschen sind, miteinander verbunden werden, und daß diejenigen Teile des Busses, die zur Herstellung dieser Verbindung nicht benötigt werden, anderweitig, insbesondere zur gleichzeitigen Herstellung von Verbindungen zwischen weiteren Einrichtungen, verwendbar sind.

Dies gestattet es, daß gleichzeitig mehrere Einrichtungen mit anderen Einrichtungen verbunden werden können, und daß über diese Verbindungen unabhängig voneinander und ohne gegenseitige Beeinflussung gleichzeitig Daten und/oder Signale ausgetauscht werden können.

Da der Verlauf der Daten- und/oder Signalpfade, über welche die Verbindungen zwischen den zu verbindenden Einrichtungen hergestellt werden, konfigurierbar ist, müssen die Einrichtungen, die miteinander verbindbar sein sollen, nicht einzeln über separate Leitungen verbunden sein. Dadurch kann die Anzahl und/oder die Länge der Leitungen, die zur praktischen Realisierung des beanspruchten Multi-Master-Bus-Systems vorgesehen werden müssen, verhältnismäßig gering sein.

Die Konfigurierung der Daten- und/oder Signalpfade durch den (in Bus-Systemen ohnehin vorhandenen) Bus-Controller ermöglicht es, daß die an den Bus anzuschließenden Einrichtungen nicht oder allenfalls unwesentlich modifiziert werden müssen, um an das neuartige Multi-Master-Bus-System angeschlossen werden zu können. Die an das neuartige Multi-Master-Bus-System anzuschließenden Einrichtungen werden trotz des einfacheren Aufbaus desselben nicht komplizierter. Ganz im Gegenteil: die an den Bus anzuschließenden Einrichtungen können sogar kleiner und einfacher aufgebaut werden als es bisher der Fall ist. Dadurch, daß immer nur die momentan zu verbindenden Einrichtungen miteinander verbunden werden können, kann nämlich das Protokoll, nach welchem die Einrichtungen miteinander kommunizieren, vereinfacht werden; insbesondere entfällt in bestimmten Fällen die Notwendigkeit, neben den eigentlich auszutauschenden Daten und/oder Signalen immer auch noch die Adresse des Empfängers und/oder der Senders mit übertragen, überwachen und auswerten zu müssen. Das einfachere Protokoll ermöglicht es, daß die zu verbindenden Einrichtungen einfacher aufgebaut sein können als bisher. Unabhängig davon entfällt in bestimmten Fällen auch die Notwendigkeit, einen Adreß-Bus vorzusehen.

Das beanspruchte Multi-Master-Bus-System ist damit einerseits klein und einfach realisierbar und betreibbar, und ermöglicht es andererseits, daß gleichzeitig mehrere Masters mit mehreren Slaves kommunizieren können.

Vorteilhafte Weiterbildungen der Erfindung sind den Unteransprüchen, der folgenden Beschreibung und den Figuren entnehmbar.

Die Erfindung wird nachfolgend anhand eines Ausführungsbeispiels unter Bezugnahme auf die Figuren näher erläutert.

Es zeigen
- Figur 1: den prinzipiellen Aufbau eines herkömmlichen Bus-Systems.
- Figur 2: ein Ausführungsbeispiel des nachfolgend näher beschriebenen Multi-Master-Bus-Systems, und
- Figur 3: eine detailliertere Darstellung eines in der Figur 2 mit III bezeichneten Teils der dort dargestellten Anordnung.

Das nachfolgend näher beschriebene Multi-Master-Bus-System ist Bestandteil eines Mikrocontrollers und verbindet verschiedene Bestandteile bzw. Komponenten des Mikrocontrollers wie beispielsweise dessen CPU, dessen interne Speichereinrichtung(en), dessen A/D-Wandler, dessen D/A-Wandler, dessen Interrupt-Controller, dessen DMA-Controller, dessen Schnittstellen zu externen Bussen und Einrichtungen, etc.

Es sei jedoch bereits an dieser Stelle darauf hingewiesen, daß hierauf keine Einschränkung besteht. Das nachfolgend beschriebene Multi-Master-Bus-System kann auch in anderen Bausteinen oder Systemen als Mikrocontrollern und/oder zur Verbindung beliebiger anderer Einrichtungen verwendet werden.

Das betrachtete Multi-Master-Bus-System zeichnet sich unter anderem dadurch aus, daß der Bus Daten- und/oder Signalpfade aufweist, deren Verlauf durch den Bus-Controller statisch und/oder dynamisch konfigurierbar ist.

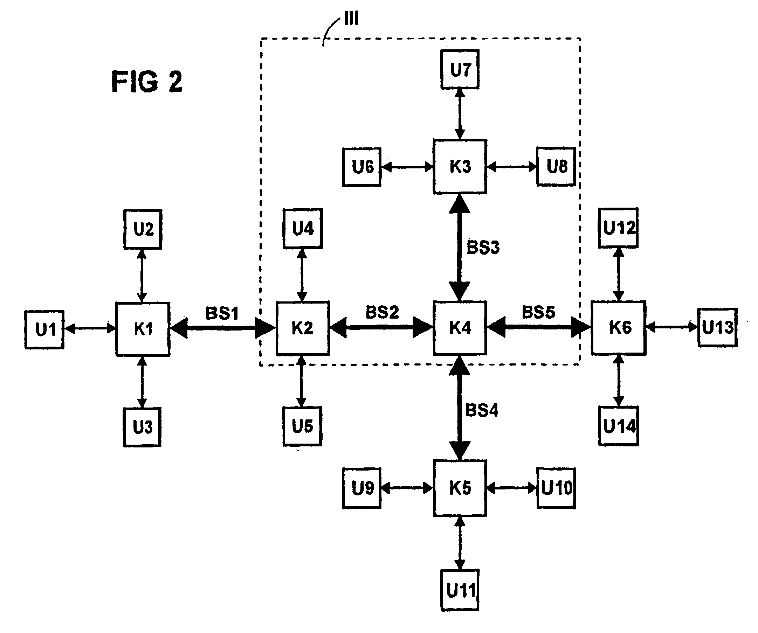

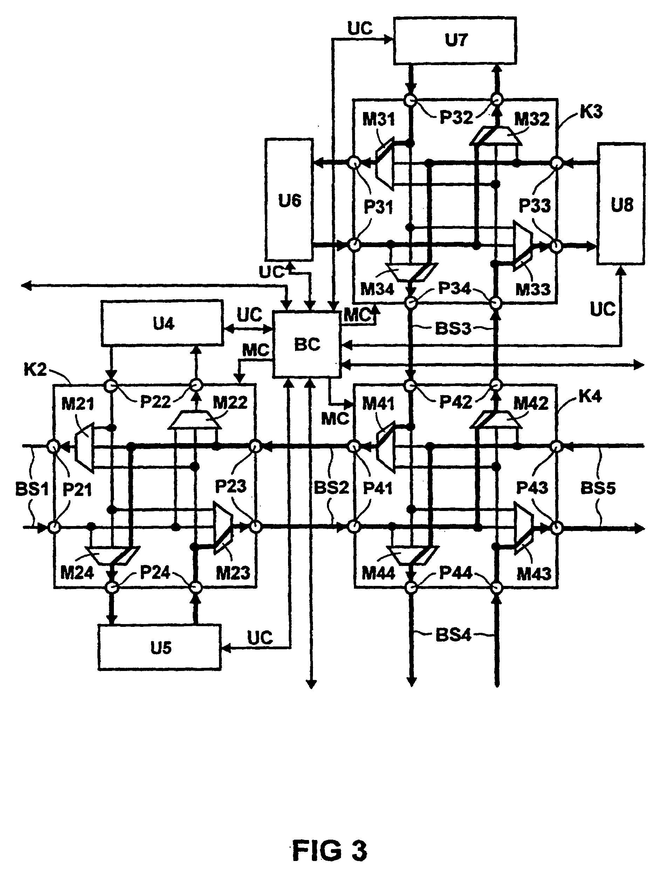

Ein Ausführungsbeispiel eines solchen Multi-Master-Bus-Systems ist in den Figuren 2 und 3 veranschaulicht, wobei die Figur 2 den prinzipiellen Aufbau des betrachteten Multi-Master-Bus-Systems zeigt, und wobei die Figur 3 Einzelheiten eines in der Figur 2 mit dem Bezugszeichen III bezeichneten Teils der Anordnung gemäß Figur 2 zeigt.

Das gezeigte Multi-Master-Bus-System umfaßt einen Bus, welcher aus Bus-Segmenten BS1, BS2, ... und im folgenden als Knoten K1, K2, ... bezeichneten Einheiten besteht. Die besagten Knoten K1, K2, ... sind zwischen den Bus-Segmenten BS1, BS2, ... und an den Stellen, an welchen an den Bus anzuschließenden Einrichtungen U1, U2, ... an den Bus angeschlossen werden, vorgesehen; über sie werden die einzelnen Bus-Segmente BS1, BS2, ... miteinander verbunden, und/oder an die den Bus anzuschließenden Einrichtungen U1, U2, ... an den Bus angeschlossen. Das betrachtete Multi-Master-Bus-System umfaßt ferner einen (nur in der Figur 3 gezeigten) Bus-Controller BC, welcher den Bus und die Busvergabe steuert.

Wie insbesondere aus der Figur 3 ersichtlich ist, weist im betrachteten Beispiel jeder der Knoten K1, K2, ... vier Ports auf, über welche den jeweiligen Knoten Daten und/oder Signale zuführbar sind, und aus welchen die jeweiligen Knoten Daten und/oder Signale ausgeben können. Die Ports sind in der Figur 3 mit den Bezugszeichen P21 bis P24 (für den Knoten K2), P31 bis P34 (für den Knoten K3), und mit P41 bis P44 (für den Knoten K4) bezeichnet.

An jedem Port ist wahlweise ein Bus-Segment BSx oder eine (über den betreffenden Knoten) an den Bus anzuschließende Einrichtung Ux anschließbar.

Es sei bereits an dieser Stelle darauf hingewiesen, daß auf die genannte Anzahl der Ports pro Knoten keine Einschränkung besteht; die jeweiligen Knoten können unabhängig voneinander beliebig viel mehr oder weniger Ports aufweisen.

Die Ports Pxx bestehen im betrachteten Beispiel jeweils aus einem Anschluß, über welchen Daten in den betreffenden Knoten Kx eingebbar sind, und einem Anschluß, über welchen Daten aus dem betreffenden Knoten ausgebbar sind. Demzufolge bestehen auch die Bus-Segmente BSx und die Verbindungen zu den über die Knoten an den Bus angeschlossenen Einrichtungen Ux aus jeweils zwei Leitungen. Hierauf besteht allerdings keine Einschränkung. Die Anzahl der Anschlüsse, über welche Daten empfangen und/oder ausgegeben werden können, und damit auch die Anzahl der Leitungen der daran angeschlossenen Bus-Segmente und der Verbindungen zu den über die Knoten an den Bus angeschlossenen Einrichtungen können beliebig viel größer sein; dies ist bei einer parallelen Übertragung von Daten über den Bus sogar eine zwingende Notwendigkeit.

Jeder der Knoten enthält ein Schalter-Netzwerk, über welches Daten und/oder Signale, die über einen der Ports in einen jeweiligen Knoten eingegeben werden, über einen beliebigen anderen Port des betreffenden Knotens aus diesen ausgegeben werden können.

Dieses Schalter-Netzwerk wird im betrachteten Beispiel durch eine entsprechende Anzahl von Multiplexern gebildet.

Vorliegend ist pro Port-Anschluß, über welchen Daten und/oder Signale aus einem jeweiligen Knoten ausgegeben werden können, ein Multiplexer vorgesehen. Für das betrachtete Beispiel heißt das, daß die Knoten jeweils vier Multiplexer enthalten. Diese Multiplexer sind in der Figur 3 mit den Bezugszeichen M21 bis M24 (für den Knoten K2), M31 bis M34 (für den Knoten K3), und M41 bis M44 (für den Knoten K4) bezeichnet. Die Port-Anschlüsse, über welche Daten und/oder Signale aus einem jeweiligen Knoten ausgegeben werden können, sind jeweils mit dem Ausgangsanschluß eines der Multiplexer des betreffenden Knotens verbunden; jedem solchen Port-Anschluß ist ein eigener Multiplexer zugeordnet. Durch die den jeweiligen Port-Anschlüssen zugeordneten Multiplexer wird bestimmt, welche Daten und/oder Signale über die betreffenden Port-Anschlüsse ausgegeben werden.

Die Multiplexer weisen im betrachteten Beispiel eine Anzahl von Eingangsanschlüssen auf, die um eins geringer ist als die Anzahl der Ports des betreffenden Knotens. An die Eingangsanschlüsse der Multiplexer werden jeweils die Daten und/oder Signale angelegt, die dem betreffenden Knoten über die dem betreffenden Multiplexer nicht zugeordneten Ports zugeführt werden. In bestimmten Fällen kann es sich als vorteilhaft erweisen, wenn an die Eingangsanschlüsse der Multiplexer auch die Daten und/oder Signale angelegt werden, die dem betreffenden Knoten über die den jeweiligen Multiplexern zugeordneten Ports zugeführt werden.

Welche der an die Multiplexer-Eingangsanschlüsse angelegten Daten und/oder Signale zum Multiplexer-Ausgangsanschluß durchgeschaltet werden, wird durch Steuerdaten oder Steuersignale bestimmt, die an in den Figuren nicht gezeigte Steueranschlüsse der Multiplexer angelegt werden. Im betrachteten Beispiel weist jeder Multiplexer zwei Steueranschlüsse auf. Die Steuerdaten bzw. Steuersignale, durch welche die jeweiligen Multiplexer gesteuert werden, werden durch den Bus-Controller BC erzeugt und von diesem über Steuerleitungen MC den Knoten (den darin enthaltenen Multiplexern) zugeführt.

Der Bus-Controller BC ist auch mit den über die Knoten Kx an den Bus angeschlossenen Einrichtungen Ux verbunden, die Master werden können. Diese Verbindungen sind in der Figur 3 mit dem Bezugszeichen UC bezeichnet.

Über diese Verbindungen übermitteln die an den Bus angeschlossenen Einrichtungen, die über den Bus mit einer der anderen Einrichtungen in Verbindung treten wollen (Master werden wollen), an den Bus-Controller Daten, aus denen der Bus-Controller ersehen kann, ob und gegebenenfalls mit welcher Einrichtung die die Daten versendende Einrichtung in Verbindung treten möchte. Der Bus-Controller ermittelt anhand der ihm vorliegenden Informationen, ob die gewünschte Verbindung hergestellt werden kann. Wenn dies der Fall ist, steuert der Bus-Controller die Knoten, genauer gesagt die darin enthaltenen Multiplexer über die Steuerleitungen MC so an, daß zwischen der Einrichtung, die die Verbindung angefordert hat, und der Einrichtung, zu welcher die Verbindung hergestellt werden soll, ein durchgehender Daten- und/oder Signalpfad gebildet wird. Gleichzeitig oder danach signalisiert der Bus-Controller der die Verbindung anfordernden Einrichtung, daß diese nunmehr Master ist und mit der Einrichtung, zu welcher eine Verbindung hergestellt werden sollte, wunschgemäß kommunizieren kann.

Die Struktur des beschriebenen Multi-Master-Bus-Systems ermöglicht es dabei, daß gleichzeitig mehrere Verbindungen zwischen an den Bus angeschlossenen Einrichtungen hergestellt werden können, wodurch gleichzeitig mehrere Einrichtungen Master sein und mit anderen Einrichtungen, genauer gesagt mit verschiedenen Slaves kommunizieren können. Der hierfür zu treibende Aufwand ist verhältnismäßig gering. Die einzige Voraussetzung, die hierfür erfüllt sein muß, besteht darin, daß der Bus-Controller vor dem Aufbau einer zweiten, dritten oder weiteren Verbindung überprüft, ob er dadurch nicht eine bereits bestehende Verbindung unterbricht. Da es dem Bus-Controller allein obliegt, die herzustellenden Verbindung durch eine entsprechende Ansteuerung der Multiplexer herzustellen, ist dies mit geringem Aufwand problemlos möglich. Dabei ist es selbstverständlich auch möglich, daß bestimmte Verbindungen mit hoher Priorität, also vorzugsweise sofort oder möglichst bald, und andere Verbindungen mit niedriger Priorität, also gegebenenfalls erst später hergestellt werden. In diesem Fall kann vorgesehen werden, daß dann, wenn eine Verbindung, die - aus welchem Grund auch immer- nicht sofort hergestellt werden kann, aber möglichst bald hergestellt werden soll, zwischenzeitlich keine anderen Verbindungen hergestellt werden, die die Herstellung der möglichst bald herzustellenden Verbindung behindern oder verzögern könnten.

Bei dem in der Figur 3 gezeigten Beispiel sind die Multiplexer so angesteuert, daß sich die fett eingezeichneten Daten- und Signalpfade ergeben. Dadurch bestehen gleichzeitig Verbindungen zwischen der Einrichtung U5 und der Einrichtung U8, der Einrichtung U6 und der Einrichtung U7, und dem Knoten K5 (einer der Einrichtungen U9 bis U11) und dem Knoten K6 (einer der Einrichtungen U12 bis U14), wodurch diese unabhängig voneinander und ohne gegenseitige Beeinflussung gleichzeitig miteinander kommunizieren können.

Darüber hinaus können sogar zusätzlich auch noch zwei der Einrichtungen U1 bis U3 miteinander verbunden werden.

Bei dem in der Figur 3 dargestellten Beispiel umfassen die Verbindungen zwischen den zu verbindenden Einrichtungen und/oder Knoten genaugenommen jeweils zwei Verbindungen: eine Verbindung, über welche von der einen Einrichtung bzw. vom einen Knoten zur anderen Einrichtung bzw. zum anderen Knoten Daten übertragbar sind, und eine Verbindung, über welche von der anderen Einrichtung bzw. vom anderen Knoten zur einen Einrichtung bzw. zum einen Knoten Daten übertragbar sind. Das beschriebene Multi-Master-Bus-System läßt sich noch flexibler und effizienter nutzen, wenn der Bus-Controller die Knoten, genauer gesagt die darin enthaltenen Multiplexer so ansteuern kann, daß zwischen miteinander zu verbindenden Einrichtungen und/oder Knoten nur eine der genannten Verbindungen aufgebaut wird, und die Ressourcen, die benötigt werden würden, um auch die andere der genannten Verbindungen aufzubauen, entweder nicht oder zur Herstellung von Verbindungen zwischen anderen Einrichtungen und/oder Knoten verwendet werden. Dadurch ist es möglich, daß gleichzeitig noch mehr Einrichtungen und/oder Knoten miteinander verbunden werden, als es ohnehin schon der Fall ist. Würde man im betrachteten Beispiel beispielsweise die Einrichtungen U5 und U8 nur über eine oder mehrere Leitungen verbinden, über welche Daten von der Einrichtung U8 zur Einrichtung U5 übertragen werden, so könnten die dadurch freiwerdenden Ressourcen (die Multiplexer M23, M33, und M42, sowie die Bus-Segment-Teile, über welche Daten vom Knoten K2 zum Knoten K4, und vom Knoten K4 zum Knoten K3 übertragen werden), in einen (wie auch immer gearteten) Ruhezustand versetzt werden oder zur Verbindung von zwei anderen Einrichtungen und/oder Knoten verwendet werden.

Bei einem Multi-Master-Bus-System, bei welchem diese Möglichkeit besteht und genutzt werden soll, müssen die daran angeschlossenen Einrichtungen zumindest teilweise dazu ausgelegt sein, bei der Anforderung einer Verbindung zu einer anderen Einrichtung zusätzlich die Richtung(en) anzugeben, in welcher zwischen den zu verbindenden Einrichtungen Daten übertragen werden sollen. Dabei kann jedoch vorgesehen werden, daß die Datenübertragungs-Richtung(en) betreffende Mitteilungen an den Bus-Controller nur erfolgen, wenn die gewünschte(n) Datenübertragungs-Richtung(en) von einem für das betreffende Multi-Master-Bus-System festgelegten Standard abweicht.

Das Multi-Master-Bus-System und die daran angeschlossenen Einrichtungen können dennoch einfach aufgebaut sein. Insbesondere ist es - anders als etwa bei einem vollvermaschten Netz - nicht erforderlich, daß Einrichtungen, die miteinander verbindbar sein sollen, einzeln über separate Leitungen dauerhaft verbunden sind. Dadurch kann die Anzahl und/oder die Länge der Leitungen, die zur praktischen Realisierung des beanspruchten Multi-Master-Bus-Systems vorgesehen werden müssen, vergleichsweise sehr gering sein.

Die Konfigurierung der Daten- und/oder Signalpfade durch den (in Bus-Systemen ohnehin vorhandenen) Bus-Controller ermöglicht es darüber hinaus, daß die an den Bus anzuschließenden Einrichtungen nicht oder allenfalls unwesentlich modifiziert werden müssen, um an das neuartige Multi-Master-Bus-System angeschlossen werden zu können. Die an das neuartige Multi-Master-Bus-System anzuschließenden Einrichtungen werden trotz des einfacheren Aufbaus desselben nicht komplizierter. Ganz im Gegenteil: die an den Bus anzuschließenden Einrichtungen können sogar kleiner und einfacher aufgebaut werden als es bisher der Fall ist. Dadurch, daß immer nur die momentan zu verbindenden Einrichtungen miteinander verbunden werden können, kann nämlich das Protokoll, nach welchem die Einrichtungen miteinander kommunizieren, vereinfacht werden; insbesondere entfällt in bestimmten Fällen die Notwendigkeit, neben den eigentlich auszutauschenden Daten und/oder Signalen immer auch noch die Adresse des Empfängers und/oder der Senders mit übertragen, überwachen und auswerten zu müssen. Das einfachere Protokoll ermöglicht es, daß die zu verbindenden Einrichtungen einfacher aufgebaut sein können als bisher. Unabhängig davon entfällt in bestimmten Fällen auch die Notwendigkeit, einen Adreß-Bus vorzusehen.

Diejenigen Bestandteile des Multi-Master-Bus-Systems, die zu einem jeweiligen Zeitpunkt nicht zur Herstellung einer Verbindung zwischen zwei miteinander zu verbindenden Einrichtungen und/oder Knoten benötigt werden, werden für die Zeit, während welcher sie nicht benötigt werden, vorzugsweise in einen definierten Zustand versetzt, wobei dieser Zustand vorzugsweise ein Zustand ist, in dem die betreffenden Multi-Master-Bus-System-Bestandteile einen möglichst geringen Energieverbrauch aufweisen.

Dies kann beispielsweise dadurch erreicht werden,
- daß die Multiplexer einen zusätzlichen Eingangsanschluß aufweisen,
- daß an diesen zusätzlichen Eingangsanschluß ein Signal mit einem bestimmten Pegel oder einem bestimmten Pegelverlauf angelegt wird, wobei der Pegel oder Pegelverlauf vorzugsweise so gewählt sind, daß der Energieverbrauch, der durch das Durchschalten des diesen Pegel oder Pegelverlauf aufweisenden Signals bewirkt wird, minimal ist,
- daß der Bus-Controller zu Zeiten, zu denen ein Multiplexer nicht zur Herstellung einer Verbindung zwischen zwei miteinander zu verbindenden Einrichtungen und/oder Knoten benötigt wird, durch eine entsprechende Ansteuerung des betreffenden Multiplexers dafür sorgt, daß dieser das an den zusätzlichen Anschluß angelegte Signal durchschaltet.

Über das beschriebene Multi-Master-Bus-System lassen sich nach alledem mit minimalem Aufwand gleichzeitig mehrere Verbindungen zwischen den daran angeschlossenen Einrichtungen herstellen.

### Bezugszeichenliste

- BC: Bus-Controller
- BSx: Bus-Segmente
- BUS: Bus
- Kx: Knoten
- MC: Steuerleitungen zur Steuerung von Mx
- Mx: Multiplexer von Kx
- Px: Ports von Kx
- UC: Verbindungsleitungen zur Verbindung von Ux und BC
- Ux: am Bus angeschlossene Einrichtungen

## Patentansprüche

1. Multi-Master-Bus-System mit einem Bus (BSx, Kx) zur Verbindung von daran angeschlossenen Einrichtungen (Ux), und mit einem den Bus und/oder die Busvergabe steuernden Bus-Controller (BC),
**dadurch gekennzeichnet,**
**daß** der Bus (BSx, Kx) Daten- und/oder Signalpfade aufweist, deren Verlauf durch den Bus-Controller (BC) statisch und/oder dynamisch konfigurierbar ist.

2. Multi-Master-Bus-System nach Anspruch 1,
**dadurch gekennzeichnet,**
**daß** der Bus (BSx, Kx) mehrere Bus-Segmente (BSx) umfaßt, die bei Bedarf miteinander verbindbar sind.

3. Multi-Master-Bus-System nach Anspruch 2,
**dadurch gekennzeichnet,**
**daß** zwischen den Bus-Segmenten (BSx) und an den Stellen, an denen an den Bus anzuschließende Einrichtungen (Ux) mit dem Bus zu verbinden sind, eine oder mehrere Schalteinrichtungen (Mx) enthaltende Knoten (Kx) vorgesehen sind.

4. Multi-Master-Bus-System nach Anspruch 3,
**dadurch gekennzeichnet,**
**daß** benachbarte Bus-Segmente (BSx) über den zwischen ihnen vorgesehenen Knoten (Kx) miteinander verbindbar oder voneinander trennbar sind.

5. Multi-Master-Bus-System nach Anspruch 3 oder 4,
**dadurch gekennzeichnet,**
**daß** an den Bus anzuschließende Einrichtungen (Ux) über Knoten (Kx) an den Bus angeschlossen werden.

6. Multi-Master-Bus-System nach einem der Ansprüche 3 bis 5,
**dadurch gekennzeichnet,**
**daß** die Knoten (Kx) jeweils zwei oder mehr Ports (Px) aufweisen, über welche ihnen Daten und/oder Signale zugeführt werden können, und über welche sie Daten und/oder Signale ausgeben können.

7. Multi-Master-Bus-System nach Anspruch 6,
**dadurch gekennzeichnet,**
**daß** an jeden Port (Px) ein Bus-Segment (BSx) oder eine an den Bus anzuschließende Einrichtung (Ux) anschließbar ist.

8. Multi-Master-Bus-System nach Anspruch 6 oder 7,
**dadurch gekennzeichnet,**
**daß** die Knoten (Kx) jeweils so ausgebildet sind, daß sie Daten und/oder Signale, die ihnen über einen ihrer Ports (Px) zugeführt werden, über einen der Ports des betreffenden Knotens ausgeben können.

9. Multi-Master-Bus-System nach einem der Ansprüche 3 bis 8,
**dadurch gekennzeichnet,**
**daß** durch die in den Knoten (Kx) enthaltenen Schalteinrichtungen (Mx) einstellbar ist, ob und gegebenenfalls über welchen Port (Px) der jeweiligen Knoten die dem betreffenden Knoten zugeführten Daten und/oder Signale aus den jeweiligen Knoten ausgegeben werden.

10. Multi-Master-Bus-System nach einem der Ansprüche 3 bis 9,
**dadurch gekennzeichnet,**
**daß** die Schalteinrichtungen (Mx) der Knoten durch Multiplexer gebildet werden.

11. Multi-Master-Bus-System nach Anspruch 10,
**dadurch gekennzeichnet,**
**daß** jedem Port (Px) der Knoten (Kx) ein Multiplexer (Mx) zugeordnet ist, und daß die von den Multiplexern durchgeschalteten Daten und/oder Signale diejenigen Daten und/oder Signale sind, die aus den Ports, denen die Multiplexer zugeordnet sind, ausgegeben werden.

12. Multi-Master-Bus-System nach Anspruch 10 oder 11,
**dadurch gekennzeichnet,**
**daß** an die Eingangsanschlüsse der Multiplexer (Mx) die Daten und/oder Signale angelegt werden, die dem Knoten (Kx), dessen Bestandteil die jeweiligen Multiplexer sind, zugeführt werden.

13. Multi-Master-Bus-System nach Anspruch 12,
**dadurch gekennzeichnet,**
**daß** an die Eingangsanschlüsse der Multiplexer (Mx) die Daten und/oder Signale angelegt werden, die dem Knoten (Kx) über die Ports (Px) zugeführt werden, denen der betreffende Multiplexer nicht zugeordnet ist.

14. Multi-Master-Bus-System nach einem der Ansprüche 3 bis 13,
**dadurch gekennzeichnet,**
**daß** die in den Knoten (Kx) enthaltenen Schalteinrichtungen (Mx) durch den Bus-Controller (BC) steuerbar sind.

15. Multi-Master-Bus-System nach einem der vorhergehenden Ansprüche,
**dadurch gekennzeichnet,**
**daß** der Bus-Controller (BC) von den am Bus angeschlossenen Einrichtungen (Ux) mitgeteilt bekommt, wenn diese über den Bus mit einer der anderen Einrichtungen in Verbindung treten wollen, und welches die Einrichtung ist, mit der sie in Verbindung treten wollen.

16. Multi-Master-Bus-System nach Anspruch 15,
**dadurch gekennzeichnet,**
**daß** der Bus-Controller (BC) von den am Bus angeschlossenen Einrichtungen (Ux) zusätzlich mitgeteilt bekommt, für welche Datentransfer-Richtung(en) die herzustellende Verbindung ausgelegt sein muß.

17. Multi-Master-Bus-System nach einem der vorhergehenden Ansprüche,
**dadurch gekennzeichnet,**
**daß** der Bus-Controller (BC) die Daten- und/oder Signalpfade, die vorhanden sein müssen, damit an den Bus angeschlossene Einrichtungen (Ux) miteinander in Verbindung treten können, durch eine entsprechende Betätigung der in den Knoten (Kx) enthaltenen Schalteinrichtungen (Mx) herstellt.

18. Multi-Master-Bus-System nach einem der vorhergehenden Ansprüche,
**dadurch gekennzeichnet,**
**daß** der Bus-Controller (BC) gleichzeitig mehreren der an den Bus angeschlossenen Einrichtungen (Ux) gestattet, mit anderen Einrichtungen in Verbindung zu treten, wenn er in der Lage ist, die hierfür erforderlichen Daten- und/oder Signalpfade herzustellen.

## Claims

1. A multimaster bus system having a bus (BSx, Kx) for connecting devices (Ux) which are connected thereto, and having a bus controller (BC) which controls the bus and/or the bus allocation,
**characterized**
**in that** the bus (BSx, Kx) has data and/or signal paths whose course can be configured statically and/or dynamically by the bus controller (BC).

2. The multimaster bus system as claimed in claim 1,
**characterized**
**in that** the bus (BSx, Kx) comprises a plurality of bus segments (BSx) which can be connected to one another when required.

3. The multimaster bus system as claimed in claim 2,
**characterized**
**in that** nodes (Kx) containing one or more switching devices (Mx) are provided between the bus segments (BSx) and at the points at which devices (Ux) needing to be connected to the bus need to be connected to the bus.

4. The multimaster bus system as claimed in claim 3,
**characterized**
**in that** adjacent bus segments (BSx) can be connected to one another or can be isolated from one another via the node (Kₓ) which is provided between them.

5. The multimaster bus system as claimed in claim 3 or 4,
**characterized**
**in that** devices (Ux) which can be connected to the bus are connected to the bus via nodes (Kx).

6. The multimaster bus system as claimed in one of claims 3 to 5,
**characterized**
**in that** the nodes (Kx) each have two or more ports (Px) which can be used to supply data and/or signals to them and which they can use to output data and/or signals.

7. The multimaster bus system as claimed in claim 6,
**characterized**
**in that** each port (Px) can have a bus segment (BSx) or a device (Ux) needing to be connected to the bus connected to it.

8. The multimaster bus system as claimed in claim 6 or 7,
**characterized**
**in that** the nodes (Kx) are respectively designed such that they can output data and/or signals supplied to them via one of their ports (Px) via one of the ports of the node in question.

9. The multimaster bus system as claimed in one of claims 3 to 8,
**characterized**
**in that** the switching devices (Mx) contained in the nodes (Kx) can set whether and, if appropriate, via which port (Px) of the respective node the data and/or signals supplied to the node in question are output from the respective nodes.

10. The multimaster bus system as claimed in one of claims 3 to 9,
**characterized**
**in that** the switching devices (Mx) in the nodes are formed by multiplexers.

11. The multimaster bus system as claimed in claim 10,
**characterized**
**in that** each port (Px) of the nodes (Kx) has an associated multiplexer (Mx), and in that the data and/or signals switched through by the multiplexers are those data and/or signals which are output from the ports with which the multiplexers are associated.

12. The multimaster bus system as claimed in claim 10 or 11,
**characterized**
**in that** the input connections of the multiplexers (Mx) have the data and/or signals applied to them which are supplied to the node (Kx) of which the respective multiplexers are part.

13. The multimaster bus system as claimed in claim 12,
**characterized**
**in that** the input connections of the multiplexers (Mx) have the data and/or signals applied to them which are supplied to the node (Kx) via the ports (Px) with which the multiplexer in question is not associated.

14. The multimaster bus system as claimed in one of claims 3 to 13,
**characterized**
**in that** the switching devices (Mx) contained in the nodes (Kx) can be controlled by the bus controller (BC).

15. The multimaster bus system as claimed in one of the preceding claims,
**characterized**
**in that** the bus controller (BC) is notified by the devices (Ux) connected to the bus of when these devices wish to use the bus to connect to one of the other devices, and to which device they wish to connect.

16. The multimaster bus system as claimed in claim 15,
**characterized**
**in that** the bus controller (BC) is additionally notified by the devices (Ux) connected to the bus of that (those) data transfer direction(s) for which the connection to be set up needs to be produced.

17. The multimaster bus system as claimed in one of the preceding claims,
**characterized**
**in that** the bus controller (BC) sets up the data and/or signal paths which need to exist so that devices (Ux) connected to the bus can connect to one another by actuating the switching devices (Mx) contained in the nodes (Kx) as appropriate.

18. The multimaster bus system as claimed in one of the preceding claims,
**characterized**
**in that** the bus controller (BC) simultaneously permits a plurality of the devices (Ux) connected to the bus to connect to other devices when it is able to set up the data and/or signal paths required for this.

## Revendications

1. Système de bus multi-maître comportant un bus (BSx, Kx) pour la liaison de dispositifs (Ux) qui y sont raccordés, et un contrôleur de bus (BC) commandant le bus et/ou la distribution du bus,
**caractérisé en ce que**
le bus (BSx, Kx) présente des chemins de données et/ou signaux dont l'évolution est configurable statiquement et/ou dynamiquement grâce au contrôleur de bus (BC).

2. Système de bus multi-maître selon la revendication 1,
**caractérisé en ce que**
le bus (BSx, Kx) comprend plusieurs segments de bus (BSx), qui peuvent être reliés les uns aux autres en cas de besoin.

3. Système de bus multi-maître selon la revendication 2,
**caractérisé en ce que**
entre les segments de bus (BSx) et aux endroits où les dispositifs (Ux) à raccorder au bus doivent être reliés au bus, des noeuds (Kx) contenant un ou plusieurs dispositifs de commutation (Mx) sont prévus.

4. Système de bus multi-maître selon la revendication 3,
**caractérisé en ce que**
les segments de bus voisins (BSx) peuvent être reliés les uns aux autres ou séparés les uns des autres par les noeuds (Kx) prévus entre eux.

5. Système de bus multi-maître selon la revendication 3 ou 4,
**caractérisé en ce que**
les dispositifs (Ux) à raccorder au bus sont raccordés par des noeuds (Kx) au bus.

6. Système de bus multi-maître selon l'une quelconque des revendications 3 à 5,
**caractérisé en ce que**
les noeuds (Kx) présentent respectivement deux ports (Px) ou davantage, par l'intermédiaire desquels peuvent leur être acheminés des données et/ou signaux et par l'intermédiaire desquels ils peuvent émettre des données et/ou signaux.

7. Système de bus multi-maître selon la revendication 6,
**caractérisé en ce que**
à chaque port (Px) peut être raccordé un segment de bus (BSx) ou un dispositif (Ux) à raccorder au bus.

8. Système de bus multi-maître selon la revendication 6 ou 7,
**caractérisé en ce que**
les noeuds (Kx) sont respectivement conçus de manière à pouvoir émettre des données et/ou signaux qui leur sont acheminés par l'intermédiaire d'un de leurs ports (Px), par l'intermédiaire d'un des ports du noeud concerné.

9. Système de bus multi-maître selon l'une quelconque des revendications 3 à 8,
**caractérisé en ce que**
il est possible, grâce aux dispositifs de commutation (Mx) contenus dans les noeuds (Kx), de définir si et le cas échéant par l'intermédiaire de quel port (Px) des noeuds respectifs les données et/ou signaux acheminés au noeud concerné sont émis à partir du noeud respectif.

10. Système de bus multi-maître selon l'une quelconque des revendications 3 à 9,
**caractérisé en ce que**
les dispositifs de commutation (Mx) des noeuds sont constitués par des multiplexeurs.

11. Système de bus multi-maître selon la revendication 10,
**caractérisé en ce que**
à chaque port (Px) des noeuds (Kx) est associé un multiplexeur (Mx) et que les données et/ou signaux transférés par les multiplexeurs sont les données et/ou signaux qui sont émis à partir des ports auxquels sont associés les multiplexeurs.

12. Système de bus multi-maître selon la revendication 10 ou 11,
**caractérisé en ce que**
aux raccordements d'entrée des multiplexeurs (Mx) sont appliqués les données et/ou signaux qui sont acheminés au noeud (Kx) dont les multiplexeurs respectifs font partie intégrante.

13. Système de bus multi-maître selon la revendication 12,
**caractérisé en ce que**
aux raccordements d'entrée des multiplexeurs (Mx) sont appliqués les données et/ou signaux qui sont acheminés au noeud (Kx) par l'intermédiaire des ports (Px) auxquels le multiplexeur concerné n'est pas associé.

14. Système de bus multi-maître selon l'une quelconque des revendications 3 à 13,
**caractérisé en ce que**
les dispositifs de commutation (Mx) contenus dans les noeuds (Kx) peuvent être commandés par le contrôleur de bus (BC).

15. Système de bus multi-maître selon l'une quelconque des revendications précédentes,
**caractérisé en ce que**
le contrôleur de bus (BC) est informé par les dispositifs (Ux) raccordés au bus si ceux-ci veulent entrer en liaison par l'intermédiaire du bus avec l'un des autres dispositifs et avec lequel des dispositifs ils veulent entrer en liaison.

16. Système de bus multi-maître selon la revendication 15,
**caractérisé en ce que**
le contrôleur de bus (BC) est de plus informé par les dispositifs (Ux) raccordés au bus du(des) sens de transfert de données pour lequel(lesquels) la liaison à établir doit être conçue.

17. Système de bus multi-maître selon l'une quelconque des revendications précédentes,
**caractérisé en ce que**
le contrôleur de bus (BC) crée les chemins de données et/ou signaux qui doivent être disponibles pour que les dispositifs (Ux) raccordés au bus puissent entrer en liaison les uns avec les autres, grâce à un actionnement adéquat des dispositifs de commutation (Mx) contenus dans les noeuds (Kx).

18. Système de bus multi-maître selon l'une quelconque des revendications précédentes,
**caractérisé en ce que**
le contrôleur de bus (BC) permet simultanément à plusieurs des dispositifs (Ux) raccordés au bus d'entrer en liaison avec d'autres dispositifs s'il est en mesure de créer les chemins de données et/ou signaux nécessaires à cet effet.
